# EUROPEAN PATENT SPECIFICATION

(11) **EP 0 813 806 B1**
(45) Date of publication and mention of the grant of the patent: **10.03.1999**
(21) Application number: 96109444.8
(22) Date of filing: 13.06.1996
(51) Int. Cl.: A01C 15/00

(54) **Stirring arrangement for particulate material, especially fertilizer, in an exit region of a container**
Rühreinrichtung für körniges Material, insbesondere Dünger, in einem Behälterauslass
Arrangement pour remuer une substance granulaire, en particulier fertilisateur, dans la sortie d'un conteneur

(43) Date of publication of application: 29.12.1997
(73) Proprietor: A.P. Laursen A/S, DK-7171 Uldum (DK)
(72) Inventor: Laursen, Nils Jorn, 8722 Hedensted (DK)
(74) Representative: Roerboel, Leif

(56) References cited:
- DE-A- 4 030 369
- DE-U- 8 629 042
- US-A- 3 432 150

## Description

### TECHNICAL FIELD

The present invention relates to a stirring arrangement of the kind set forth in the preamble of claim 1.

### BACKGROUND ART

A stirring arrangement of the kind referred to above is disclosed in DE-A-4,030,369. Such stirring arrangements may be used in apparatus for spreading particulate material, especially fertilizer, on agricultural fields. A well-known type of apparatus of this kind comprises two containers arranged side-by-side at right angles to the direction of movement of the vehicle carrying the apparatus, such as a tractor, and during normal operation the closable openings in the bottoms of both containers are kept open so as to allow the fertilizer to be spread along a wide strip of the field. When working along the edge of a field, it is, however, in certain cases necessary to avoid spreading fertilizer across the border to the adjoining field. One way of achieving this is to close the closable opening in the bottom of that part of the apparatus being closest to the adjoining field. This means, of course, that the fertilizer stops flowing through the exit region in which the stirring arrangement is situated, and the rather heavy vibrations, to which the apparatus is subjected when moving across an agricultural field, may cause the fertilizer to "cake" into a more or less solid mass. In this condition, the fertilizer may offer such a high resistance to the stirrer in the stirring arrangement, that the stirrer is damaged, such as by having its arms bent or broken.

### DISCLOSURE OF THE INVENTION

It is the object of the present invention to provide a stirring arrangement of the kind referred to above, with which it is possible to avoid that the arms or other stirring members of the stirrer are broken, bent or otherwise damaged when encountering greater resistance than that normally offered by the particulate material when flowing towards the opening in the bottom of the container, and this object is achieved with a stirring arrangement, according to the invention also exhibiting the features set forth in the characterizing clause of claim 1. With such an arrangement, an increased resistance to the movements of the stirring members will cause the eccentricity of the part of the intermediate carrier, on which the stirrer is supported for free rotation, to be reduced to zero, thus allowing the stirrer to remain stationary without any reaction forces being created.

Advantageous embodiments of the stirring arrangement according to the present invention, the effects of which - beyond what is self-evident - are explained in the following detailed part of the present specification, are set forth in claims 2-6.

The present invention also relates to an apparatus for spreading granular material. This apparatus is of the kind set forth in the preamble of claim 7, and according to the present invention, it also exhibits the features set forth in the characterizing clause of this claim 7.

### BRIEF DESCRIPTION OF THE DRAWINGS

In the following detailed part of the present description, the invention will be explained in more detail with reference to the drawings, in which
Figure 1 shows a part of a spreading apparatus, in which a stirring arrangement according to the present invention is used,
Figure 2 is a side view, partly in longitudinal section, of a first embodiment of a stirring arrangement according to the invention, shown in the normal operating position,
Figures 3 and 4 are side and top views, respectively, at a reduced scale of the spreading arrangement shown in Figure 2 in the normal operating position,
Figures 5 and 6 show the same as Figures 3 and 4, but in an inactive position, in which the stirrer is stationary, and
Figure 7 in the same manner as Figure 3 shows a second embodiment of the stirring arrangement according to the invention, comprising a spring designed to urge the arrangement away from an inactive position like that shown in Figures 5 and 6.

### DESCRIPTION OF THE PREFERRED EMBODIMENTS

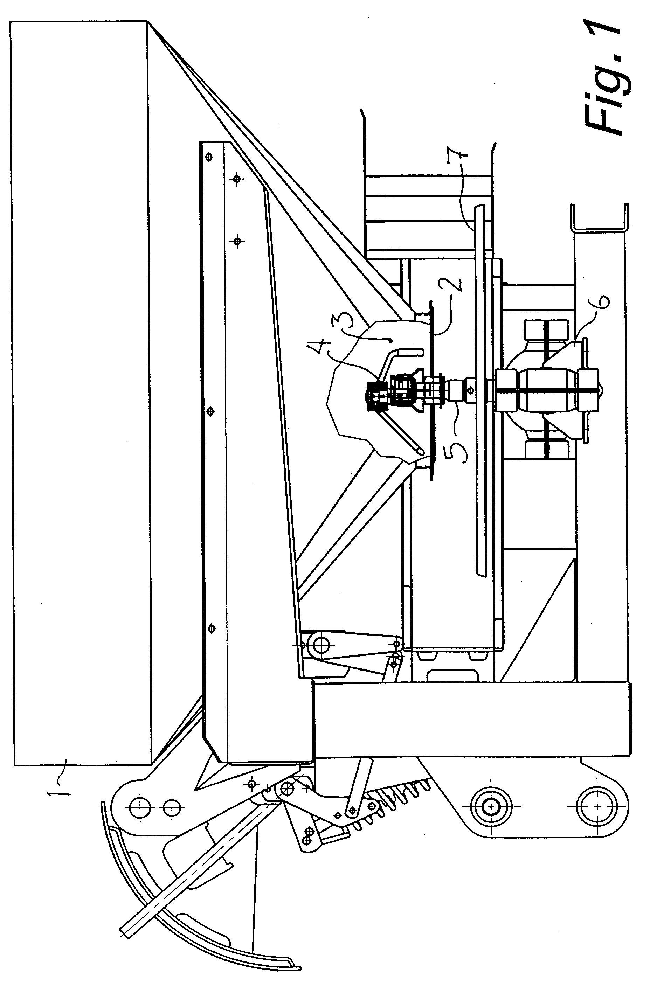

Figure 1 shows an apparatus for spreading particulate material, especially fertilizer, on an agricultural field. The principal active parts are
- a container 1 for the material (not shown), closed by a bottom 2 with a closable and normally adjustable opening, not visible in the drawing but well known within this technology,

- an exit region 3 immediately above the bottom 2 and accommodating
- a stirrer 4 mounted on
- a drive shaft 5 extending upwardly from
- a gear-box 6 and also constituting a drive shaft for
- a spreader disk 7 normally having vanes (not shown)
for spreading the material falling through the opening in the bottom 2 so as to throw the material out on a field being traversed by the apparatus, the latter being supported on a tractor or other agricultural vehicle.

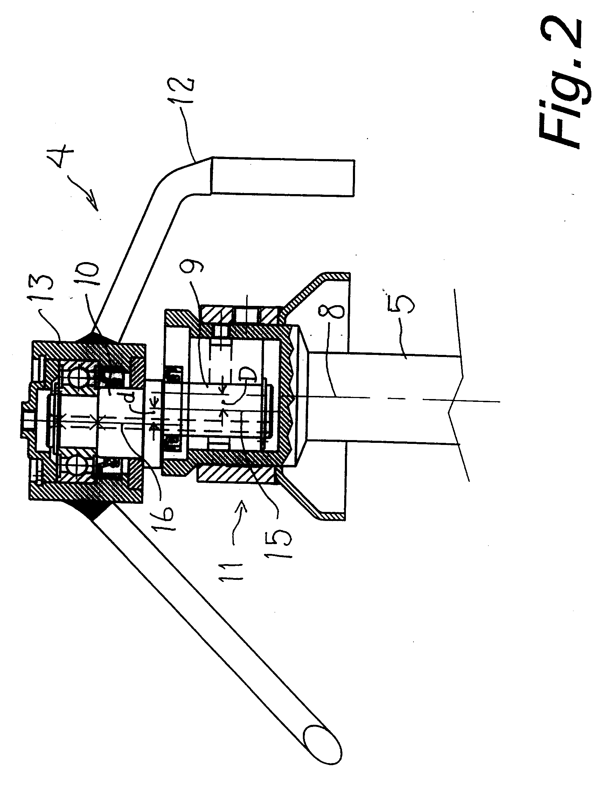

Figure 2 shows a stirring arrangement that can be used in the apparatus shown in Figure 1. In the same manner as, at least with regard to kinematic principles, the stirring arrangement referred to initially, it comprises
- a drive shaft 5 having a rotational axis 8, in normal operation being vertical or at least substantially at right angles to the surface of the field being traversed by the apparatus,
- an intermediate carrier in the form of a stub shaft 9,10, the lower part 9 of which is supported for free rotation by the upper end 11 of the drive shaft 5, the upper part 10, that extends parallel to but eccentrically relative to the lower part 9 and supports for free rotation a stirrer 4, consisting of
- a number of stirrer arms 12 secured to
- a common hub 13 supported on the stub shaft upper part 10 by
- a ball bearing 14.

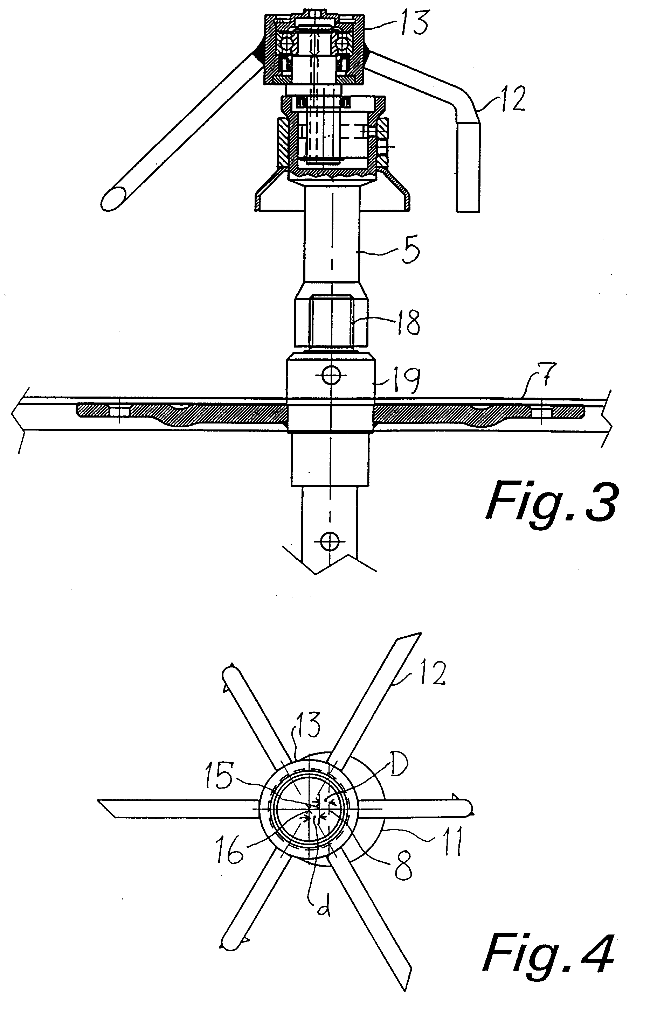

As may be seen from Figure 2, the axis 15 of relative rotation of the lower end 9 of the stub shaft 9,10 is offset by a distance d from the axis 16 of the rotation of the stirrer 4 about the upper part 10 of the stub shaft 9,10. Thus, in the position shown in Figure 2, the eccentricity of the axis 16 of stirrer rotation relative to the rotational axis 8 of the drive shaft 5 will be the sum of
d as mentioned above and
D the eccentricity of the axis 15 of relative rotation relative to the rotational axis 8 of the drive shaft 5, the reason for this being that the axis 15 of relative rotation is situated between and lying in the same plane as the two other axes, viz. the axis 16 of stirrer rotation and the rotational axis 8 of the drive shaft 5, cf. also Figure 4.

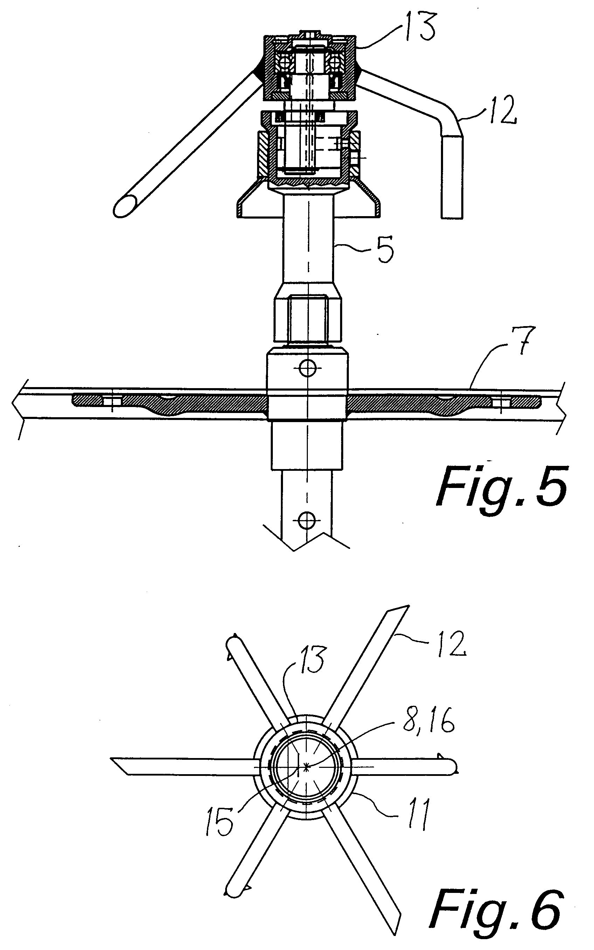

Now, as mentioned in the introductory part of the present description, if the stirrer arms 12 encounter an increased resistance from the fertilizer to be distributed, the resulting forces transmitted through the upper part 10 of the stub shaft 9,10 will cause the lower part 9 to rotate relative to the upper end 11 of the drive shaft 5. If this process continues, d being equal to D as shown, the stub shaft 9,10 will continue its rotation relative to the upper end 11 of the drive shaft 5 until the axes 8 and 16 coincide, cf. Figure 6. In this relative position of the stub shaft 9,10 and the drive shaft 5, the upper part 10 of the stub shaft is co-axial with the drive shaft 5, so that no lateral forces will any longer be exerted by the stub shaft upon the hub 13, allowing the latter to remain stationary.

This situation, i.e. the situation shown in Figures 5 and 6, will continue until relative rotation between the stub shaft 9,10 and the drive shaft 5 takes place.

Considering the fact that there will always be at least some degree of friction between the drive shaft 5 and the lower part 9 of the stub shaft 9,10, continued rotation of the drive shaft 5 will cause a corresponding torque to be exerted on the stub shaft, thus tending to bring it out of the position shown in Figure 5. If in the meantime, the particulate material surrounding the stirrer 4 has begun to move and thus becoming more loose, the corresponding reduction in mechanical resistance will allow the arms 12 on the stirrer 4 to exercise at least some radial movement, thus allowing the stub shaft to move rotationally towards the position shown in Figure 2.

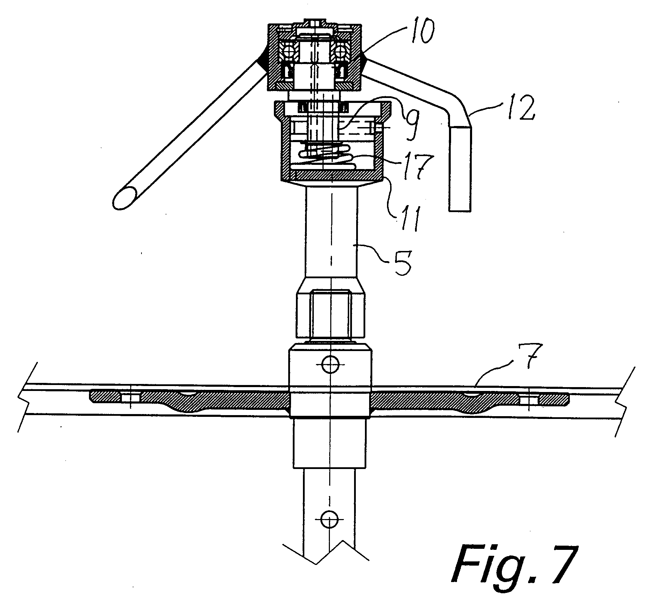

The frictional torque between the drive shaft 5 and the lower part 9 of the stub shaft 9,10 may not always be sufficient to initiate the rotational movement of the stub shaft towards the position shown in Figure 2, and if so, additional measures may be taken to facilitate such movement. One possibility is to insert a spring 17, cf. Figure 7, connecting the lower part 9 of the stub shaft 9,10 to the upper end 11 on the drive shaft 5, the spring 17 being secured to the parts concerned in such a manner, that in its "neutral" or tensionless state, the stub shaft 9,10 is in a position, in which its upper part 10 extends eccentrically relative to the drive shaft 5. This means, of course, that in a relative position of the parts corresponding to that illustrated in Figures 5 and 6, the spring 17 will tend to urge the parts concerned away from this position.

Another possibility of urging the stub shaft away from the "neutral" position shown in Figure 5 is to shape the stub shaft 9,10 or provide it with a radial attachment (not shown) in such a manner, that its centre of gravity lies laterally of a plane containing the axes 15 and 16 of relative rotation and of stirrer rotation, respectively. With such an arrangement, the centrifugal force will urge the stub shaft 9,10 away from the "neutral" position shown in Figure 5.

Yet another possibility could be to provide the lower part 9 of the stub shaft 10 and the upper end 11 of the drive shaft 5 with permanent magnets (not shown), positioned in a manner to urge the stub shaft 9,10 away from the "neutral" position.

In order to facilitate repair and maintenance, the entire stirring arrangement can as shown in Figure 3 be releasably secured to the remainder of the apparatus, such as through a screw connection 18 releasably connecting it to the drive shaft 19 for the spreader disk 7.

### LIST OF PARTS

- d: distance
- D: distance
- 1: container
- 2: bottom
- 3: exit region
- 4: stirrer
- 5: drive shaft
- 6: gear box
- 7: spreader disk
- 8: rotational axis
- 9: stub shaft lower part
- 10: stub shaft upper part
- 11: upper end (of 5)
- 12: stirrer arm
- 13: hub
- 14: ball bearing
- 15: axis of relative rotation (first eccentric axis)
- 16: axis of stirrer rotation (second eccentric axis)
- 17: spring
- 18: screw connection
- 19: drive shaft

## Claims

1. Stirring arrangement for the exit region (3) of a container (1) for particulate material, e.g. fertilizer, adapted to drop said material through a closable opening (in 2) below said exit region (3) onto a rotating spreader disk (7), said stirring arrangement being of the kind comprising
a) a substantially vertical rotary drive shaft (5), the upper end (11) of which carries freely rotatably about a first eccentric axis (15) parallel to the axis (8) of said drive shaft (5) the lower part of
b) an intermediate carrier (9,10), carrying freely rotatably about a second eccentric axis (16) parallel to said first eccentric axis (15)
c) a stirrer (4,12,13), radially protruding parts (12) of which are adapted to engage with said particulate material in said exit region (3),
**characterized in**
d) that the distances (D,d) from said first eccentric axis (15) to said drive shaft axis (8) and to said second eccentric axis (16) are equal.

2. Arrangement according to claim 1, **characterized in** that means are provided to rotationally urge said intermediate carrier (9,10) relative to said drive shaft (5) away from the position, in which the axis (8) of said drive shaft (5) coincides with said second eccentric axis (16).

3. Arrangement according to claim 2, **characterized in** that said urging means comprise a spring (17) connecting said intermediate carrier (9,10) to said drive shaft (5).

4. Arrangement according to claim 2, **characterized in** that said urging means are constituted by said intermediate carrier (9,10) having a centre of gravity spaced from the plane comprising said first (15) and second (16) eccentric axes.

5. Arrangement according to claim 2, **characterized in** that said urging means comprise at least one permanent magnet secured to or integral with said drive shaft (5) co-operating magnetically with at least one permanent magnet secured to or integral with said intermediate carrier (9,10).

6. Arrangement according to any one or any of the claims 1-5, **characterized in** that said intermediate carrier (9,10) constitutes an offset stub shaft consisting of
a) an upper part (10) supporting said stirrer (4) for free rotation about said second eccentric axis (16), and
b) a lower part (9) secured to or integral with said upper part (10) and supported for free rotation on said drive-shaft upper end (11) about said first eccentric axis (15).

7. Apparatus for spreading granular material, such as fertilizer, and comprising a container (1) for said material adapted to drop said material from an exit region (3) thereof comprising a stirring arrangement (5,6,8-17) through a closable opening (in 2) therebelow onto a rotating spreader disk (7), **characterized in** that said stirring arrangement (5,6,8-17) exhibits the features set forth in any one or any of the claims 1-6.

## Patentansprüche

1. Rühreinrichtung für körniges Material, z. B. Dünger, für den Auslassbereich (3) eines Behälters (1), die geeignet ist, das Material durch eine verschließbare Öffnung (in 2) unterhalb des Auslassbereiches (3) auf eine Schleuderscheibe (7) eines Streuers fallen zu lassen, wobei die Rühranordnung von der Art ist, die aufweist:
a) eine im wesentlichen vertikale Rotationsantriebswelle (5), deren oberes Ende (11) frei drehbar um eine erste exzentrische Achse (15) parallel zu der Achse (8) der Antriebswelle (5) den unteren Teil
b) eines Zwischenträgers (9, 10) hält, wobei der Zwischenträger (9, 10) frei drehbar um eine zweite exzentrische Achse (16) parallel zu der ersten exzentrischen Achse (15)
c) einen Rührer (4, 12, 13) hält, dessen radial vorstehende Teile (12) geeignet sind, mit dem körnigen Material in dem Auslassbereich (3) in Eingriff zu kommen,
dadurch gekennzeichnet,
d) daß die Abstände (D, d) von der ersten exzentrischen Achse (15) zur Antriebswellenachse (8) und zur zweiten exzentrischen Achse (16) gleich sind.

2. Einrichtung nach Anspruch 1, dadurch gekennzeichnet, daß Einrichtungen vorgesehen sind, um den Zwischenträger relativ zu der Antriebswelle (5) drehend weg von der Position zu drücken, in der die Achse (8) des/der Antriebswelle(n) mit der zweiten exzentrischen Achse (16) zusammenfällt.

3. Einrichtung nach Anspruch 2, dadurch gekennzeichnet, daß die Druckeinrichtungen eine Feder (17) aufweisen, die den Zwischenträger (9, 10) mit der Antriebswelle (5) verbindet.

4. Einrichtung nach Anspruch 2, dadurch gekennzeichnet, daß die Druckeinrichtungen aus dem Zwischenträger (9, 10) mit einem Schwerpunkt bestehen, der von der Ebene beabstandet ist, welche die erste (15) und zweite (16) exzentrische Achse enthält.

5. Einrichtung nach Anspruch 2, dadurch gekennzeichnet, daß die Druckeinrichtungen mindestens einen Permanentmagneten aufweisen, der an der Antriebswelle (5) befestigt ist oder ein integraler Teil davon ist und magnetisch mit mindestens einem Permanentmagneten zusammenwirkt, welcher an dem Zwischenträger (9, 10) befestigt ist oder ein integraler Teil davon ist.

6. Einrichtung nach einem einzelnen oder einem der Ansprüche 1 bis 5, dadurch gekennzeichnet, daß der Zwischenträger (9, 10) einen versetzten Wellenstumpf bildet, der besteht aus
a) einem oberen Teil (10), der den Rührer (4) für eine freie Rotation um die zweite exzentrische Achse (16) hält, und
b) einem unteren Teil (9), der an dem oberen Teil (10) befestigt ist oder ein integraler Teil davon ist und für eine freie Rotation um die erste exzentrische Achse (15) auf dem oberen Ende (11) der Antriebswelle gehalten wird.

7. Vorrichtung zum Streuen von körnigem Material, wie etwa Dünger, die aufweist: einen Behälter (1) für das Material, der geeignet ist, das Material von einem Auslassbereich (3), der eine Ruhreinrichtung (5, 6, 8-17) aufweist, durch eine verschließbare Öffnung (in 2) darunter auf eine Schleuderscheibe (7) eines Streuers fallen zu lassen, dadurch gekennzeichnet, daß die Rühreinrichtung (5, 6, 8-17) die in einem einzelnen oder einem der Ansprüche 1 bis 6 dargelegten Merkmale zeigt.

## Revendications

1. Ensemble d'agitation de la région de sortie (3) d'un récipient (1) d'une matière particulaire, tel qu'un engrais, destiné à faire tomber la matière par une ouverture qui peut être fermée (en 2) au-dessous de la région de sortie (3) sur un disque rotatif d'épandage (7), l'ensemble d'agitation étant du type qui comprend
a) un arbre rotatif pratiquement vertical (5) d'entraînement dont l'extrémité supérieure (11) porte, d'une manière pouvant tourner librement autour d'un premier axe excentrique (15) parallèle à l'axe (8) de l'arbre d'entraînement (5), la partie inférieure de
b) un support intermédiaire (9, 10), portant, en rotation libre autour d'un second axe excentrique (16) parallèle au premier axe excentrique (15),
c) un agitateur (4, 12, 13) dont des parties (12) qui dépassent radialement sont destinées à coopérer avec la matière particulaire dans la région de sortie (3),
caractérisé en ce que
d) les distances (D, d) du premier axe excentrique (15) à l'axe (5) de l'arbre d'entraînement et au second axe excentrique (16) sont égales.

2. Ensemble selon la revendication 1, caractérisé en ce qu'un dispositif est destiné à repousser le support intermédiaire (9, 10) par rapport à l'arbre d'entraînement (5) en rotation à distance de la position dans laquelle l'axe (8) de l'arbre d'entraînement (5) coïncide avec le second axe excentrique (16).

3. Ensemble selon la revendication 2, caractérisé en ce que le dispositif de rappel comprend un ressort (17) qui raccorde le support intermédiaire (9, 10) à l'arbre d'entraînement (5).

4. Ensemble selon la revendication 2, caractérisé en ce que le dispositif de rappel est constitué par le support intermédiaire (9, 10) qui a un centre de gravité placé à distance du plan contenant le premier (15) et le second (16) axe excentrique.

5. Ensemble selon la revendication 2, caractérisé en ce que le dispositif de rappel comporte au moins un aimant permanent fixé à l'arbre d'entraînement (5) ou solidaire de celui-ci et qui coopère magnétiquement avec au moins un aimant permanent fixé au support intermédiaire (9, 10) ou solidaire de celui-ci.

6. Ensemble selon l'une quelconque des revendications 1 à 5, caractérisé en ce que le support intermédiaire (9, 10) constitue un arbre décalé rectiligne constitué par
a) une partie supérieure (10) supportant l'agitateur (4) afin qu'il tourne librement autour du second axe excentrique (16), et
b) une partie inférieure (9) fixée à la partie supérieure (10) ou solidaire de celle-ci et supportée afin qu'elle tourne librement sur l'extrémité supérieure (11) de l'arbre d'entraînement autour du premier axe excentrique (15).

7. Appareil d'épandage d'une matière granulaire, telle qu'un engrais, comprenant un récipient (1) pour la matière, destiné à faire tomber la matière d'une région de sortie (3) et comprenant un ensemble d'agitation (5, 6, 8-17), par l'intermédiaire d'une ouverture (en 2) qui peut être fermée placée au-dessous et sur un disque rotatif d'épandage (7), caractérisé en ce que l'ensemble d'agitation (5, 6, 8-17) a les propriétés selon l'une ou plusieurs des revendications 1 à 6.
